# EUROPEAN PATENT SPECIFICATION

(11) **EP 0 799 108 B1**
(45) Date of publication and mention of the grant of the patent: **15.03.2000**
(21) Application number: 95931238.0
(22) Date of filing: 22.09.1995
(51) Int. Cl.: B23Q 11/12, B23Q 11/10

(54) **MACHINING APPARATUS**
BEARBEITUNGSMASCHINE
APPAREIL D'USINAGE

(30) Priority: 22.12.1994 FI 946034
(43) Date of publication of application: 08.10.1997
(73) Proprietor: Kultala, Matti, 92120 Raahe (FI)
(72) Inventor: Kultala, Matti, 92120 Raahe (FI)
(74) Representative: Simmelvuo, Markku Kalevi
(86) International application number: FI9500522
(87) International publication number: WO9619315

(56) References cited:
- RU-C- 2 037 514
- SU-A- 1 011 675
- US-A- 3 618 707
- US-A- 3 750 847
- PATENT ABSTRACTS OF JAPAN, Vol. 10, No. 81, M-465; & JP,A,60 221 242 (JIYURARON K.K.), 5 November 1985.

## Description

The present invemtion concerns a machine tool as defined in the preamble to Claim 1, such as a lathe, for machining a work piece.

In prior art, e.g. US-A-3 618 707, a machine tool is known comprising a frame with power means, a machining member for removing material from the workpiece, a gear box for transmitting the driving force required to move the work piece and/or the machining means, a guide for supporting the work piece being machined and/or the machining means, an oil space for the gear box containing lubricant, a lubricant space for the guide containing lubricant, and a cutting oil tank containing cutting oil for lubricating and/or cooling the workpiece and the machining member and from which the lubricant is conducted to the point of machining. With the aid of the gear box lubricant the gear box is lubricated and cooled while the machine tool is running. At the guide, the lubricant eliminates friction, whereby moving the machining means is rendered light. Cutting oil is furthermore employed as cooling fluid at the point of machining when material is being removed from the workpiece with the machining member.

At present, the lubricant for gear box and guide is mineral-based oil, which constitutes problem waste. On the machining means, too, mineral-based oils are used for cutting oil, diluted e.g. with water. As in the course of machining the cutting oil runs into the same container as the guide lubricant, problems arise because the substances differing in type do not mix. The particular problem then encountered is short service life of the oil, and odour detriments which occur. Furthermore, mineral oils produce problem waste and involve considerable disposal costs, and since the cutting oil is frequently diluted with water, separation of water from the waste oil is cumbersome and cost-intensive.

The object of the present invention is to eliminate the problems discussed in the foregoing. Specifically, the object of the present invention is to bring forth a machine tool in which the cutting oil and the lubricant which become mixed together will not cause any problems like those in the known art described in the foregoing.

The object of the invention is further to bring forth a machine tool in which the cutting oil and lubricants used are user-friendly and environment-friendly, meating the standards imposed on environmental products.

Regarding the features characterizing the invention, reference is made to the claims section.

The machine tool of the invention comprises a frame with power means, such as an electric motor, and a gear box for providing the driving power required for moving the workpiece and/or the machining means. The machine tool of the invention further comprises a machining member for removing material from the workpiece, and a guide for supporting the workpiece being machined and/or the machining means. In addition, the machine tool comprises a lubricant space for the gear box with lubricant, a lubricant space for the guide with lubricant, and a cutting oil tank in which cutting oil is provided for lubricating and/or cooling the workpiece and the machining member, this cutting oil being conducted to the point of machining.

As taught by the invention, the guide lubricant and the cutting oil are one and the same lubricant. Thus, the problems caused in the lubricant due to admixing of cutting oil can be eliminated in the machine tool of the invention. The lubricant to be used is advantageously a water-soluble tall oil-based oil, which is biologically degradable and it contains corrosion-inhibiting agent. An additive, corrosion-inhibiting agent, is added to the oil in order to inhibit corrosion of the lubricated and/or cooled objects. Significant advantages are thereby gained compared with prior art, inasmuch as the guide lubricant and cutting oil which have become mixed together need not be separated in connection with after-treatment and the spent oil can be disposed of with ease e.g. by burning it. Moreover, using tall oil-based oil is advantageous as to costs compared with use of mineral oil-based oils.

In an embodiment of the present invention the gear box lubricant is a water-soluble tall oil-based oil containing corrosion-inhibiting agent. Thereby the lubrication of all lubricating points in the machine tool is managed with one and the same environment-friendly and user-friendly oil.

Advantageously, the lubricant which is conducted to the machining means is diluted with water, the lubricant containing about 1 to 10% tall oil-based oil, advantageously 5 ± 3%, and the remainder mainly water. Dilution of the lubricant is performed in order to improve the lubricant's cooling properties and to reduce the consumption of tall oil-based oil. The oil is moreover diluted in order to improve the fluidity of the oil.

In an embodiment of the invention, the lubricant contains additives, such as antioxidant and anti-foam agent. Additives are added to the oil in order to prevent oxidation and foaming. The total proportion of additives in the lubricant is thus less than about 5%, advantageously about 1 to 5%, and most advantageously about 1 to 3%. Hereby the lubricant meets the standards imposed on environment-friendly products.

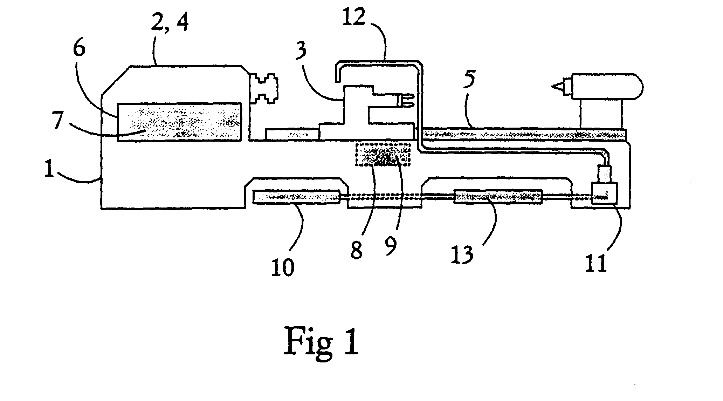

The present invention is described in the following with the aid of examples, referring to the attached drawing, schematically presenting a machine tool conforming to the present invention.

The machine tool depicted in the drawing comprises a frame 1 with power means 2 and gear box 4 for providing the driving power required to move the workpiece and/or the machining member 3. The gear box 4 has a separate oil space 6 of its own, lubricant 7 being circulated therefrom to lubricate the gears. The machine tool depicted in the figure further comprises a machining member 3, with the aid of which material is removed from the workpiece. When metal is being machined e.g. with the aid of a carbide tool, the workpiece and the machining member 3 are both heated, for which reason cutting oil 13 is directed to the point of machining for cooling the workpiece and machining member 3.

Moreover, the machine tool depicted in the drawing comprises a guide 5 for supporting the workpiece which is being machined and/or the machining member, and a guide lubricant tank 8. The machining member 3 is displaced along the guide 5 in a predetermined direction while the guide is lubricated with guide lubricant 9.

A cutting oil tank 10 has been provided in the lower part of the frame 1, whence cutting oil 13 is supplied with the aid of a pump 11 by a separate pipe system 12 to the point of machining when a work piece is being machined. During the progress of machining the cutting oil 13 runs off the work piece and the machining members 3 down upon the guide 5 and frame 1, where it becomes mixed with the guide lubricant 9, running further back to the cutting oil tank 10.

In the drawing, that area has been shaded where according to the invention lubricant 14 is present, that is, gear box lubricant 7, guide lubricant 9 and cutting oil 13, all of these being one and the same water-soluble, tall oil-based, biologically degradable oil. Since the guide lubricant 9 is undiluted lubricant 14, and since the cutting oil 13 is diluted with water, the mixing just described results in the favourable situation that as the amount of cutting oil 13 diminishes, only water need be added in the cutting oil tank 10.

In a study, the tall oil-based water-soluble lubricant of a machine tool according to the invention was investigated as to various characteristics. In the following table some of the characteristics of some lubricants conforming to the invention are presented.

**TABLE 1**

| Characteristic | Lubricant 1 | Lubricant 2 |
|---|---|---|
| Viscosity, mm²/s 40°C | 32 | 46 |
| Viscosity index | 220 | 220 |
| Density, g/cm³ 20°C | 0.95 | 0.98 |
| Flash point, °C | 228 | 234 |
| Congealing point (without additive), °C | -24 | -18 |
| Heat tolerance, hrs 260°C | 12 | 12 |

Characteristics studied in the Example were: corrosion, resistance to oxidation, foaming tendencies, and the substance's emulsifying property. Moreover, samples were subjected to four-ball tests and FZG gear wheel tests. The lubricant samples involved in the study consisted of seven 5-litre sample batches.

Table 2 shows the results of the corrosion test. The quality specification for lubricants regarding copper corrosion is la, and quality specification for steel corrosion is zero (no corrosion).

**TABLE 2**

| | Steel corrosion ASTM D 665 A (24 h/60°C) | Copper corrosion ASTM D 130 (3 h/100°C) |
|---|---|---|
| Sample 1 | No corrosion | 1a |
| Sample 2 | Slight corrosion (abt. 0.5%) | 1a |
| Sample 3 | No corrosion | 1a |
| Sample 4 | No corrosion | 1a |
| Sample 5 | No corrosion | 1a |
| Sample 6 | No corrosion | 1a |
| Sample 7 | No corrosion | 1a |

Table 3 shows the results of the oxidation resistance test carried out in an apparatus conforming to the ASTM G 525 method. In the test, 100 ml of oil were enclosed in a pressure vessel, this being placed in a water bath. The change of oxygen pressure in the pressure vessel was followed during the test. The unit of pressure in Table 3 is psi.

**TABLE 3**

| Time, h | Start | 12 | 24 | 36 | 48 | 60 | 72 |
|---|---|---|---|---|---|---|---|
| Sample 1 | 120 | 110 | 95 | 85 | 75 | 60 | 47 |
| Sample 2 | 121 | 107 | 90 | 75 | 55 | 40 | 25 |
| Sample 3 | 122 | 70 | 42 | 28 | 18 | 14 | 10 |
| Sample 4 | 115 | 70 | 27 | 17 | 11 | 8 | 5 |
| Sample 5 | 123 | 70 | 32 | 19 | 11 | 7 | 3 |
| Sample 6 | 119 | 70 | 42 | 25 | 15 | 10 | 7 |
| Sample 7 | 124 | 115 | 104 | 95 | 86 | 79 | 71 |

The foaming tendency of the samples according to the ASTM D 892 method is shown in Table 4. In the tests, blowing was repeated three times, and the sample temperatures during different sequences were:
Seq I = 24°C
Seq II = 93.5°C
Seq III = 24°C, after 93.5°C

**TABLE 4**

| | Foam density 5 min. after blowing, ml | | | Foam density 10 min. after blowing, ml | | |
|---|---|---|---|---|---|---|
| | Seq I | Seq II | Seq III | Seq I | Seq II | Seq III |
| Sample 1 | 340 | 30 | 245 | 0 | 0 | 0 |
| Sample 2 | 470 | 45 | 470 | 0 | 0 | 0 |
| Sample 3 | 380 | 45 | 390 | 10 | 0 | 5 |
| Sample 4 | 30 | 20 | 30 | 0 | 0 | 0 |
| Sample 5 | 460 | 20 | 470 | 0 | 0 | 0 |
| Sample 6 | 270 | 30 | 270 | 0 | 0 | 0 |
| Sample 7 | 495 | 65 | 485 | 55 | 0 | 40 |

Emulsion characteristics (water separation), according to the ASTM D 1401 method:

| | | |
|---|---|---|
| Sample 1 | 40-40-0 (20 min.) | Water separation took place in 20 min. The water phase was milky. Emulsion: 0 ml. |
| Sample 2 | 3-0-77 (60 min.) | No water separation took place. After 60 min. there was: oil phase 3 ml, water phase 0 ml, and emulsion 77 ml. |
| Sample 3 | 39-38-3 (30 min.) | There was no complete water separation, but |
| | | emulsion quantity decreased to 3 ml, and therefore the test was discontinued. |
| Sample 4 | 40-40-0 (10 min.) | Complete emulsification took place in 10 min. |
| Sample 5 | 40-38-2 (25 min.) | No complete separation took place, but emulsion quantity decreased to less than 3 ml, so that the test was discontinued. |
| Sample 6 | 40-37-3 (35 min.) | No complete separation took place, but emulsion quantity decreased to less than 3 ml, so that the test was discontinued. |
| Sample 7 | 0-0-80 (60 min.) | No water separation took place; after 60 min. the emulsion quantity was 80 ml. |

In the case of Sample 7, forming of emulsion took place immediately when water and oil were poured into the same container.

Furthermore, four-ball tests were carried out with the samples, applying methods ASTM D 2783 (ten-second test with stepwise increasing load) and ASTM D 4172 (one-houe test with 400 N load). The tests served to elucidate the wear inhibition and high pressure (EP) properties of the samples. In the test according to ASTM D 2783, the seizing load was 1500 N for all samples.

In the one-hour test the abrasion mark diameters were:

| | |
|---|---|
| Sample 1 | 0.6 mm |
| Sample | 2 0.5 mm |
| Sample 3 | 1.7 mm |
| Sample 4 | 1.5 mm |
| Sample 5 | 0.7 mm |
| Sample 6 | 1.2 mm |
| Sample 7 | 0.5 mm |

Furthermore, on the strength of the one-hour test the inherent wear inhibition properties of Samples 1, 2, 5 and 7 were good. In the tests made with stepwise raised load, the results found with Sample 1 were exceptional: abrasion was minimal all the way up to seizing load.

Table 5 presents the damage load grades measured as results in the FZG gear wheel tests.

**TABLE 5**

| | Damage load grade, |
|---|---|
| Sample 1 | 8 |
| Sample 2 | 9 |
| Sample 3 | 8 |
| Sample 4 | 8 |
| Sample 5 | 10 |
| Sample 6 | 9 |
| Sample 7 | 9 |

The damage load grade according to the DIN 51354 method is determined from the weight loss of the gears. The identical test procedure, with visual assessment according to the CEC L-07-A-85 method would in most instances yield a damage load grade one step lower: the tooth flanks showed shearing marks over an area more than one gear breadth in aggregate while the weight loss was minor. Specific abrasion was very low in the case of six samples. The lubricant temperatures also remained comparatively low.

In the foregoing the invention has been described by way of example in order to illustrate rhe invention, without in any way confining it.

## Claims

1. A machine tool, such as a lathe, for machining a workpiece, comprising
- a frame (1) with power means (2);
- a machining member (3) for removing material from the workpiece;
- a gear box (4) for transmitting the driving power required for moving the workpiece and/or the machining member;
- a guide (5) for supporting the workpiece and/or the machining member;
- a gear box lubricant space (6), in which gear box lubricant (7) has been provided;
- a guide lubricant space (8), in which guide lubricant (9) has been provided; and
- a cutting oil tank (10) with oil conduits (11,12),
in which cutting oil (13) has been provided and from which the cutting oil is conducted to the point of machining for cooling the workpiece and/or the machining member, and wherein the guide lubricant (9) and the cutting oil (13) are one and the same lubricant (14), **characterized in that** the lubricant (14) is water soluble tall oil-based oil and is biologically degradable and contains corrosion-inhibiting agent for preventing corrosion of the objects which are being lubricated and/or cooled.

2. Machine tool according to claim 1, **characterized in that** the gear box lubricant (7) is water-soluble tall oil-based oil.

3. Machine tool according to claim 1 or 2, **characterized in that** the cutting oil (13) conducted to the machining member (3) is diluted with water, the cutting oil (13) containing about 1 to 10% tall oil-based oil, advantageously 5 ± 3%, and the remainder mainly water.

4. Machine tool according to any one of claims 1-3, **characterized in that** the lubricant (14) contains oxidation-inhibiting agent for preventing oxidation.

5. Machine tool according to any one of claims 1-4, **characterized in that** the lubricant (14) contains anti-foaming agent for preventing foaming of the lubricant.

6. Machine tool according to claim 4 or 5, **characterized in that** the aggregate proportion of additives in the lubricant (14) is less than about 5%, advantageously about 1 to 5%, and most advantageously about 1 to 3%.

7. The use of biologically degradable and tall oil-based oil containing corrosion-inhibiting agent, as a lubricant of a machine tool such as a guide lubricant, a gear box lubricant and a cutting oil.

## Patentansprüche

1. Werkzeugmaschine, insbesondere Drehmaschine, für die Bearbeitung eines Werkstücks, bestehend aus
- einem Rahmen (1) mit Antrieb (2);
- einem Bearbeitungswerkzeug (3) zum Abtragen von Material von einem Werkstück;
- einem Getriebe (4) für die Übertragung der zum Bewegen des Werkstücks und/oder des Bearbeitungswerkzeugs erforderlichen Antriebskraft;
- einer Führung (5) zur Abstützung des Werkstücks und/oder des Bearbeitungswerkzeugs;
- einem Getriebe-Schmiermittel-Behälter (6), in dem Getriebe-Schmiermittel (7) bereitgestellt ist;
- einem Führungs-Schmiermittel-Behälter (8), in dem Schmiermittel (9) für die Führung bereitgestellt ist; und
- einem Schneidöl-Tank (10) mit Ölleitungen (10, 12), worin Schneidöl (13) bereitgestellt ist und von wo aus das Schneidöl zur Kühlung des Werkstücks und/oder des Bearbeitungswerkzeugs zum Bearbeitungspunkt geleitet wird, wobei das Führungs-Schmiermittel (9) und das Schneidöl (13) ein und dasselbe Schmiermittel (14) sind, **dadurch gekennzeichnet,** daß das Schmiermittel (14) ein wasserlösliches Öl auf Tallöl-Basis und biologisch abbaubar ist und zum Unterbinden von Korrosion der zu kühlenden und/oder zu schmierenden Objekte ein korrosionshemmendes Mittel enthält.

2. Werkzeugmaschine nach Anspruch 1, **dadurch gekennzeichnet**, daß das Getriebe-Schmiermittel (7) ein wasserlösliches Öl auf Tallöl-Basis ist.

3. Werkzeugmaschine nach Anspruch 1 oder 2, **dadurch gekennzeichnet**, daß das zu dem Bearbeitungswerkzeug (3) geleitete Schneidöl (13) mit Wasser verdünnt ist, wobei das Schneidöl (13) zwischen 1 und 10% auf Tallöl basierendes Öl, vorteilhaft 5 ± 3%, und im übrigen hauptsächlich Wasser enthält.

4. Werkzeugmaschine nach einem der Ansprüche 1 bis 3, **dadurch gekennzeichnet**, daß das Schmiermittel (14) oxidationshemmende Mittel enthält, um Oxidation zu verhindern.

5. Werkzeugmaschine nach einem der Ansprüche 1 bis 4, **dadurch gekennzeichnet**, daß das Schmiermittel (14) ein Schaumverhütungsmittel enthält, um ein Aufschäumen des Schmiermittels zu verhindern.

6. Werkzeugmaschine nach einem der Ansprüche 4 oder 5, **dadurch gekennzeichnet**, daß der Gesamtanteil an Additiven in dem Schmiermittel (14) unterhalb 5 %, vorteilhaft zwischen 1 und 5%, und am vorteilhaftesten zwischen 1 und 3% liegt.

7. Verwendung von biologisch abbaubarem, ein korrosionshemmendes Mittel enthaltendem Öl auf Tallöl-Basis als Schmiermittel für eine Werkzeugmaschine, insbesondere als Führungs-Schmiermittel, als Getriebe-Schmiermittel und als Schneidöl.

## Revendications

1. Machine-outil, comme par exemple un tour, pour l'usinage d'une pièce à usiner, comprenant
- un bâti (1) avec des moyens d'alimentation électrique (2) ;
- un élément d'usinage (3) pour l'enlèvement de matière sur la pièce à usiner ;
- une boîte de vitesses (4) pour la transmission de l'énergie d'entraînement nécessaire pour déplacer la pièce à usiner et/ou l'élément d'usinage ;
- une glissière (5) pour supporter la pièce à usiner et/ou l'élément d'usinage ;
- un espace de lubrification (6) de la boîte de vitesses, dans lequel a été prévu un lubrifiant (7) pour boîte de vitesses ;
- un espace de lubrification (8) de la glissière, dans lequel a été prévu un lubrifiant (9) pour glissière, et
- un réservoir d'huile de coupe (10) avec conduites d'huile (11, 12), dans lequel a été prévue l'huile de coupe (13), et à partir duquel l'huile de coupe est amenée au point d'usinage pour refroidir la pièce à usiner et/ou l'élément d'usinage, et dans lequel le lubrifiant pour glissière (9) et l'huile de coupe (13) sont un seul et même lubrifiant (14), caractérisée en ce que le lubrifiant (14) est de l'huile à base de tallol soluble dans l'eau, est biodégradable, et contient un agent inhibiteur de corrosion pour empêcher la corrosion des objets qui sont lubrifiés et/ou refroidis.

2. Machine-outil selon la revendication 1, caractérisée en ce que le lubrifiant pour boîte de vitesses (7) est une huile à base de tallol soluble dans l'eau.

3. Machine-outil selon les revendications 1 ou 2, caractérisée en ce que l'huile de coupe (13) amenée à l'élément d'usinage (3) est diluée avec de l'eau, l'huile de coupe (13) contenant environ 1 à 10 % d'huile à base de tallol, avantageusement 5 ± 3 %, et le reste étant principalement de l'eau.

4. Machine-outil selon l'une quelconque des revendications 1 à 3, caractérisée en ce que le lubrifiant (14) contient un agent inhibiteur d'oxydation pour empêcher l'oxydation.

5. Machine-outil selon l'une quelconque des revendications 1 à 4 caractérisée en ce que le lubrifiant (14) contient un agent antimoussant pour empêcher le moussage du lubrifiant.

6. Machine-outil selon l'une quelconque des revendications 4 ou 5, caractérisée en ce que la proportion globale d'additifs dans le lubrifiant (14) est inférieure à environ 5 %, avantageusement d'environ 1 à 5 %, et plus avantageusement d'environ 1 à 3 %.

7. Utilisation d'huile biodégradable et à base de tallol contenant un agent inhibiteur de corrosion comme lubrifiant d'une machine-outil, par exemple lubrifiant pour glissière, lubrifiant pour boîte de vitesses et huile de coupe.
